# EUROPEAN PATENT APPLICATION

(11) **EP 1 575 110 A1**
(43) Date of publication of application: **14.09.2005**
(21) Application number: 04746362.5
(22) Date of filing: 24.06.2004
(51) Int. Cl.: H01M 8/04

(54) **DIRECT METHANOL FUEL CELL SYSTEM**

(30) Priority: 01.07.2003 JP 2003270208; 04.12.2003 JP 2003406032
(71) Applicant: YAMAHA MOTOR CO., LTD., Shizuoka 438-8501 (JP)
(72) Inventor: MURAMATSU, Yasuyuki, Yamaha Motor Co., Ltd, Iwata-shi, Shizuoka 438-8501 (JP); KOHDA, Hideo, Yamaha Motor Co., Ltd, Iwata-shi, Shizuoka 438-8501 (JP); SHIOZAWA, Souichi, Yamaha Motor Co., Ltd, Iwata-shi, Shizuoka 438-8501 (JP)
(74) Representative: Grünecker, Kinkeldey, Stockmair & Schwanhäusser Anwaltssozietät
(86) International application number: PCT/JP2004/008893
(87) International publication number: WO 2005/004267

(57) **Abstract**

There is provided a direct methanol fuel cell system 1 which sits stably and can reduce influence on a fuel cell stack 3 due to impact from around. The fuel cell system 1 includes: an aqueous solution tank 7 for storing methanol aqueous solution; a fuel tank 5 for storing methanol fuel to be supplied to the aqueous solution tank 7; and a fuel cell stack 3 supplied with the methanol aqueous solution from the aqueous solution tank 7 for generating electric energy through electrochemical reactions. The fuel tank 5 and the aqueous solution tank 7 are disposed above the fuel cell stack 3.

## Description

### TECHNICAL FIELD

The present invention relates to a direct methanol fuel cell system, and more specifically to a direct methanol fuel cell system which uses unreformed methanol directly for power generation.

### BACKGROUND ART

As a fuel cell system which uses methanol as a fuel for power generation, a direct methanol fuel cell (hereinafter may also abbreviated as DMFC) system which uses methanol directly in power generation has been a focus of research and development.

With no components required for reforming methanol, DMFC system can be simple in construction and light in weight, and is expected to be used in a variety of applications.
An example of DMFC system which has an output of 2.5 kW is disclosed in the following document:
[Non-Patent Document 1]
Holger Janssen, Marcus Noelke, Walter Zwaygardt, Hendrik Dohle, Juergen Mergel, Detlef Stolten, "DMFC SYSTEMS: 2.5 KW CLASS IN COMPACT DESIGN", Institute for Materials and Processes in Energy Systems Forschungszentrum Juelich GmbH 52425 Juelich, Germany

### DISCLOSURE OF THE INVENTION

### PROBLEMS TO BE SOLVED BY THE INVENTION

However, in the DMFC system disclosed in the above Document 1, a fuel tank is disposed obliquely below a fuel cell stack, and further, a heat exchanger is disposed under the fuel cell stack and below a center region thereof.

Because of this, in the DMFC system as a whole, the fuel cell stack which is a heavy component is disposed at a high place, and the DMFC system has a high center of gravity. Therefore, the DMFC system sits relatively unstably, and the fuel cell stack is susceptible to impact from above the DMFC system for example.

It is therefore a primary object of the present invention to provide a direct methanol fuel cell system capable of sitting stably and reducing influence on the fuel cell stack due to impact from around.

### MEANS FOR SOLVING THE PROBLEMS

According to an aspect of the present invention, there is provided a direct methanol fuel cell system which includes: an aqueous solution tank for storing methanol aqueous solution; a fuel tank for storing methanol fuel to be supplied to the aqueous solution tank; and a fuel cell stack supplied with the methanol aqueous solution from the aqueous solution tank for generating electric energy through electrochemical reactions. The fuel tank and the aqueous solution tank are disposed above the fuel cell stack.

According to the present invention, by disposing the fuel tank and aqueous solution tank above the heavy fuel cell stack, it becomes possible to lower the center of gravity of the fuel cell system. Therefore, it becomes possible to improve stability of the fuel cell system in terms of component layout. Further, even when an impact is applied from above to the fuel cell system, it is possible to block the impact with the fuel tank and the aqueous solution tank, and reduce adverse influence on the fuel cell stack.

Preferably, the direct methanol fuel cell system further includes an air pump disposed below the fuel cell stack, for supplying the fuel cell stack with air containing oxygen. By disposing the heavy air pump at a lower position as described, it becomes possible to further lower the center of gravity of the fuel cell system, improving stability of the fuel cell system and vibration resistance.

Further, preferably, the fuel tank and the aqueous solution tank are disposed side by side generally at the same height. A fuel pump is disposed below the fuel tank and the aqueous solution tank, for pumping the methanol fuel supplied from the fuel tank to the aqueous solution tank. In this case, it becomes possible to maintain generally the same fluid levels between the methanol fuel stored in the fuel tank and the methanol aqueous solution stored in the aqueous solution tank. Therefore, it becomes possible, when the fuel pump, which is disposed below the fuel tank and the aqueous solution tank, operates to supply methanol fuel from the fuel tank to the aqueous solution tank, to reduce pressure difference between the inlet and the outlet of the fuel pump which is due to fluid level difference in the tanks. As a result, it becomes possible to use a fuel pump which has a relatively small pumping capacity, to design and manufacture the fuel pump easily, and to reduce cost of design and manufacture of the entire fuel cell system. Further, by disposing the fuel pump below the fuel tank, it becomes easy to gravitationally supply the methanol fuel from fuel tank to the fuel pump.

Further preferably, the fuel tank is disposed above the aqueous solution tank. In this case, by utilizing gravity, the methanol fuel from the fuel tank can be supplied to the aqueous solution tank by open/close operations of an addition valve without using a fuel pump. This allows to use addition valves which are cheaper than pumps, and to reduce cost of the entire fuel cell system.
Preferably, there is disposed a heat exchanger for a heat-exchanging operation made to the methanol aqueous solution outputted from the aqueous solution tank before sending to the fuel cell stack, on a side of the fuel cell system. This allows greater exposure of the heat exchanger to ambient air, leading to improved heat exchange efficiency as well as making possible to dispose the aqueous solution tank and fuel tank thereabove.

Further, preferably, a gas-liquid separator for gas-liquid separation of moisture content discharged from the fuel cell stack is placed between the fuel cell stack and the heat exchanger. This enables to cool the fuel cell stack with cooled air produced in the operation of the gas-liquid separator.

Further preferably, the gas-liquid separator has at least part of the gas-liquid separation pipe faced to at least part of the heat exchange pipe. This allows to reduce mounting space for the heat exchanger system (the heat exchanger and the gas-liquid separator), making possible to reduce the size of the entire fuel cell system.

Preferably, the heat exchanger and the gas-liquid separator are opposed to a controller, sandwiching an air pump which is disposed below the fuel cell stack. This enables to space the controller from the heat exchanger and the gas-liquid separator. Therefore when there is a temperature increase in the heat exchanger and the gas-liquid separator due to heat exchange operation by the heat exchanger and the gas-liquid separator, it is possible to reduce influence of the temperature increase on the controller than in the case where the controller is placed adjacent to the heat exchanger system (the heat exchanger or the gas-liquid separator). As a result, it is possible to reduce temperature increase in the controller which serves as part of the control system.

Further, preferably, the gas-liquid separator includes a gas-liquid separation pipe capable of letting moisture content from the fuel cell stack flow down gravitationally. This makes easy to gravitationally discharge moisture content which contains water obtained by the gas-liquid separation, toward the water tank.

Further preferably, the fuel tank includes a side surface provided with a first fitting, and the aqueous solution tank includes a side surface provided with a second fitting to mate the first fitting. In this case, by mating the first fitting and the second fitting, the fuel tank and the aqueous solution tank are integrated into a single-piece tank, enabling to reduce the size of the fuel cell system.

Preferably, the direct methanol fuel cell system includes: a drain pipe connected with the water tank for draining water from the water tank; and a cap attachable to and detachable from a discharging end of the drain pipe for preventing water from discharging. When the fuel cell system is not used for an extended period of time, if the cap is attached to the outlet end of the drain pipe, it is possible to stop discharge water from the drain pipe and raise the fluid level in the aqueous solution tank high enough to submerge at least the electrolyte films (solid high polymer films) in the fuel cell stack, preventing the electrolyte films from drying. Therefore, even if the fuel cell system is not used for an extended time, there is no performance deterioration in the cell stack due to dried electrolyte films. The cap may be replaced with a valve.

Further, preferably, the direct methanol fuel cell system includes a drain pipe connected with the water tank for draining water from the water tank. The drain pipe is flexible and has a pivotable discharging end, for the drain pipe discharging end to be placed above an upper surface of the fuel cell stack. By raising the discharging end of the drain pipe higher than the upper surface of the fuel cell stack, it is possible to stop discharge water from the drain pipe and to submerge at least the electrolyte films of the fuel cell stack. Therefore, even if the fuel cell system is not used for an extended time, there is no performance deterioration in the cell stack due to dried electrolyte films.

### BRIEF DESCRIPTION OF THE DRAWINGS

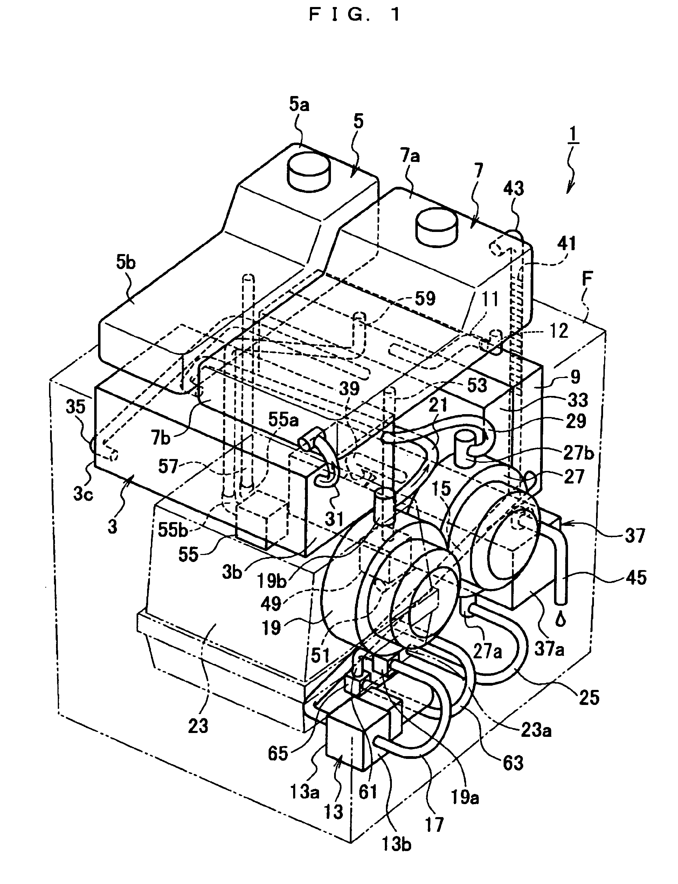

[Fig. 1]
   A perspective view outlining an embodiment of the present invention.
[Fig. 2]
   A front view outlining the embodiment in Fig. 1.
[Fig. 3]
   A right side view outlining the embodiment in Fig. 1.
[Fig. 4]
   An enlarged perspective view of a heat exchanger and a gas-liquid separator used in the embodiment in Fig. 1.
[Fig. 5]
   A block diagram outlining the embodiment in Fig. 1.
[Fig. 6]
   A front view outlining a variation of the embodiment in Fig. 1.
[Fig. 7]
   A front view outlining another variation of the embodiment in Fig. 1.
[Fig. 8]

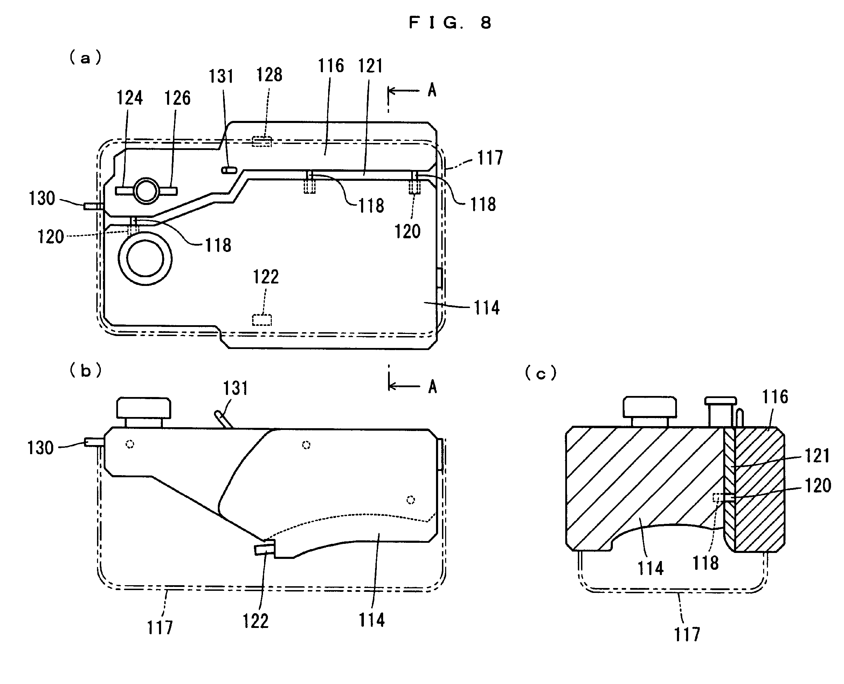

   Fig. 8(a) is a plan view outlining a fuel tank and an aqueous solution tank, and how they are mounted. Fig. 8(b) is a longitudinal side view thereof, whereas Fig. 8(c) is a sectional view taken in lines A-A in Fig. 8(a).
[Fig. 9]
   A block diagram outlining another embodiment of the present invention.

### LEGEND

- 1, 1A, 1B, 1C: Direct methanol fuel cell systems
- 3: Fuel cell stack
- 5, 114: Fuel tanks
- 7, 116: Aqueous solution tanks
- 9: Heat exchanger
- 10: Heat exchange pipe
- 11, 12, 15, 17, 21, 25, 29, 31, 35, 39, 43, 51, 53, 57, 59: Pipes
- 13: Aqueous solution pump
- 23: Air pump
- 33: Gas-liquid separator
- 34: Gas-liquid separation pipe
- 37: Water tank
- 45, 45b: Drain pipes
- 49: Water pump
- 55: Fuel pump
- 81: Controller
- 105: Cap
- 118: Dowel
- 120: Dowel hole
- 132, 134: Addition valves

### BEST MODE FOR CARRYING OUT THE INVENTION

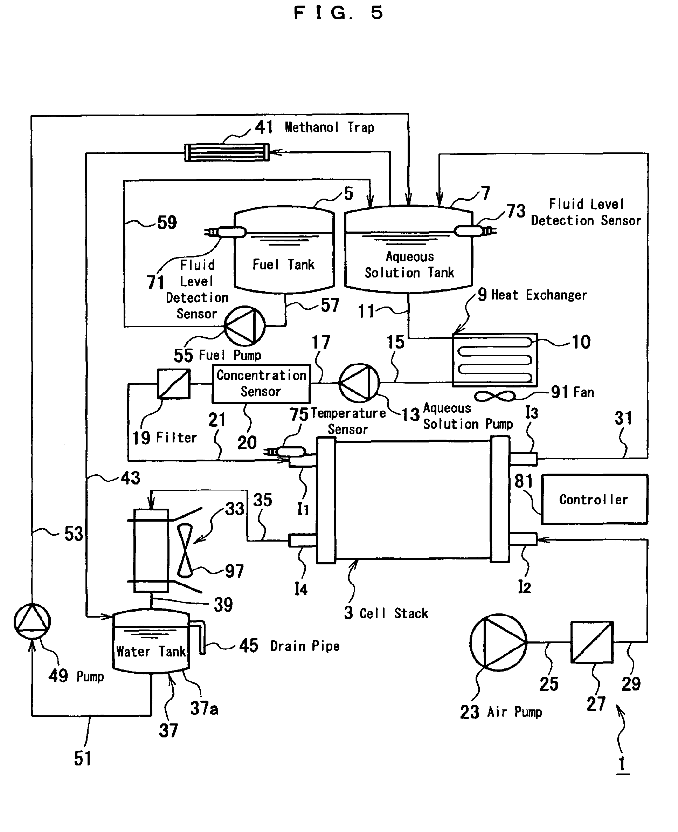

Hereinafter, description will be made for embodiments of the present invention with reference to the drawings.
Referring to Fig. 1 through Fig. 5, a direct methanol fuel cell system (hereinafter will simply be called fuel cell system) 1 as an embodiment of the present invention is a stationary system which has an output capacity of 400 W - 500 W approx. for example, and includes a generally box-like (parallelepiped) case F.

A fuel cell stack (hereinafter simply called cell stack) 3 is fixed in the case F. The cell stack 3 is a stack of a plurality of single battery cells each capable of generating electric energy through electrochemical reactions between hydrogen derived from methanol, and oxygen. Each single battery cell which constitutes the cell stack 3 includes an electrolyte (electrolyte film) provided by e.g. a solid molecular film, and a pair of a fuel electrode (anode) and an air electrode (cathode) faced to each other with the electrolyte in between.

On top of the case F i.e. above the cell stack 3, a fuel tank 5 and an aqueous solution tank 7 are fixed. The fuel tank 5 and the aqueous solution tank 7 are both generally parallelepiped, and are disposed along a line perpendicular to the length of cell stack 3 (stacking direction), (i.e. widthwise of the cell stack 3). The fuel tank 5 and the aqueous solution tank 7 are placed side by side, generally to the same height, in the stacking direction of the cell stack 3. In the present embodiment, the fuel tank 5 and the aqueous solution tank 7 are disposed so that their tank bottom surfaces are generally at the same height.

The fuel tank 5 holds a methanol fuel (high concentration (50% approx. for example) methanol aqueous solution) which is used as a fuel for the above-mentioned electrochemical reaction in the cell stack 3. The aqueous solution tank 7 holds an aqueous solution of the methanol, which is a solution of the methanol fuel from the fuel tank 5 diluted to a suitable concentration (3% approx. for example) for the electrochemical reaction in the cell stack 3.

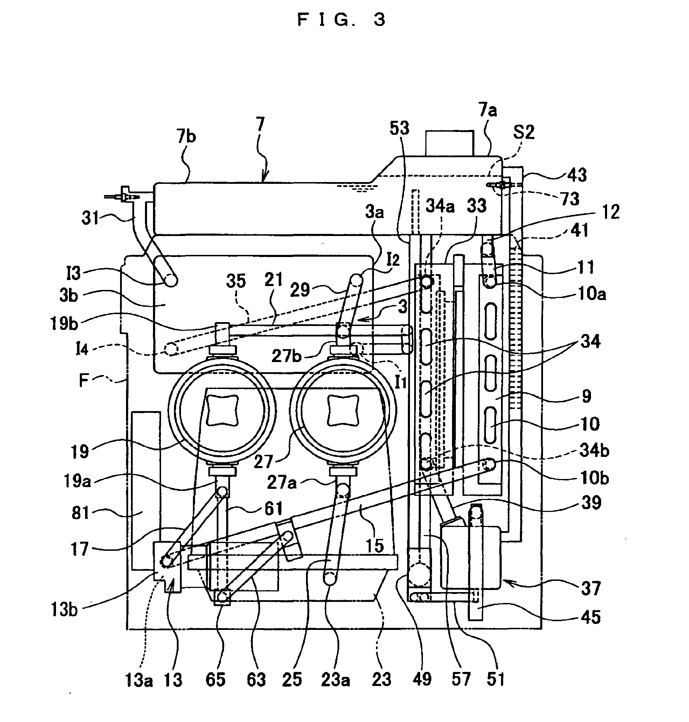

Further, behind the cell stack 3 (on the right side of the cell stack 3 in Fig. 3) and below ends 5a and 7a respectively of the fuel tank 5 and the aqueous solution tank 7, there is a heat exchanger 9 provided by a radiator. The heat exchanger 9 is placed in parallel to the stacking direction of the cell stack 3. The aqueous solution tank 7 and the heat exchanger 9 are connected with each other by a pipe 11. The pipe 11 has an end connected with a pipe 12 which is attached to a lower surface of the aqueous solution tank 7. The pipe 11 has another end connected with an upper end 10a of a heat exchange pipe 10 of the heat exchanger 9.

Further, at the bottom within the case F and below another end 7b of the aqueous solution tank is an aqueous solution pump 13. The aqueous solution pump 13 and the heat exchanger 9 are connected with each other by a pipe 15. The pipe 15 has an end connected with a lower end 10b of the heat exchange pipe 10 of the heat exchanger 9. The pipe 15 extends obliquely downward from the heat exchanger toward the aqueous solution pump, with another end of the pipe 15 connected with a side surface 13a of the aqueous solution pump 13.

The aqueous solution pump 13 is connected with a filter 19 via a pipe 17. The filter 19 is disposed above the aqueous solution pump 13. The pipe 17 has its end connected with a side surface 13b of the aqueous solution pump 13, which is a side surface parallel to the side surface 13a. The pipe 17 extends obliquely upward, curving generally in a shape of U. The pipe 17 has another end connected with a fitting pipe 19a which is provided in a lower portion of the filter 19. The filter 19 removes impurities in the methanol aqueous solution which flows in the pipe 17.

Further, in the pipe 17 which is between the aqueous solution pump 13 and the filter 19, a concentration sensor 20 is disposed in order to detect the concentration of methanol aqueous solution flowing in the pipe 17.

The filter 19 has an upper portion provided with an output pipe 19b, which is connected with a pipe 21. The pipe 21 extends along the cell stack 3, i.e. along a widthwise side surface 3b which faces the filter 19, to the side of the heat exchanger, turns approximately 90 degrees and extends along a longitudinal side surface 3a of the cell stack 3, then turns along a widthwise side surface 3c which is parallel to the side surface 3b, and then leads to a fuel inlet I1 which is formed near a lower corner of the side surface 3c of the cell stack 3.

Further, an air pump 23 is disposed below the cell stack 3 in order to supply air which contains oxygen. The air pump 23 is connected with a filter 27 via a pipe 25. The filter 27 is placed next to the filter 19. The pipe 25 has an end connected with a pump outlet 23a provided at a lower end of a side surface of the air pump 23 which is a side surface on the side of aqueous solution pump 13. The pipe 25 extends upward and curves generally in a shape of U. The pipe 25 has another end connected with a fitting pipe 27a provided in a lower portion of the filter 27. The filter 27 removes impurities in the air which flows in the pipe 25.

The filter 27 has an upper portion provided with an output pipe 27b, which is connected with an air inlet I2 provided near an upper corner of the side surface 3b of the cell stack 3, via a pipe 29.

Near the other upper corner of the side surface 3b of the cell stack 3 is an exhaust gas discharge port 13, which is connected with another end 7b of the aqueous solution tank 7, via a pipe 31.

On the other hand, a gas-liquid separator 33 which is provided by a radiator is placed between the side surface 3a of the cell stack 3 and the heat exchanger 9. The cell stack 3 and the gas-liquid separator 33 are connected with each other by a pipe 35. The pipe 35 has an end connected with a water outlet port I4 near the other lower corner of the side surface 3c of the cell stack 3. The pipe 35 has another end connected with an upper end 34a of a gas-liquid separation pipe 34 of the gas-liquid separator 33.

Then, on the bottom within the case F, and below the heat exchanger 9 and the gas-liquid separator 33, there is disposed a water tank 37 which is a parallelepiped sitting along the stacking direction of the cell stack 3. The water tank 37 and the gas-liquid separator 33 are connected with each other by a pipe 39. The pipe 39 has an end connected with a water supply hole H formed on an upper surface of a tank main body 37a of the water tank 37. The pipe 39 has another end connected with a lower end 34b of the gas-liquid separation pipe 34 of the gas-liquid separator 33.

The end 7a of the aqueous solution tank 7 and the tank main body 37a of the water tank 37 are connected with each other by a pipe 43. The pipe 43 is provided with a methanol trap (cooling fins) 41 inserted therein.

The water tank 37 is provided with a drain pipe 45 for discharging part of water and gas (exhaust gas) from the tank main body 37a.

Further, the water tank 37 is connected with a water pump 49 via a pipe 51. The water pump 49 and the aqueous solution tank 7 are connected with each other via a pipe 53.

Further, on the bottom within the case F and below the fuel tank 5 is disposed a fuel pump 55.

The fuel pump 55 and the fuel tank 5 are connected with each other by a pipe 57. The pipe 57 has an end connected with a lower surface of the fuel tank 5. The pipe 57 extends downward, i.e. toward the fuel pump 55. The pipe 57 has another end connected with the pipe 57 via an entrance port 55a.

The fuel pump 55 has an exit 55b, which is connected with a pipe 59. The pipe 59 extends upward along the pipe 57, but turns midway toward the aqueous solution tank, to connect the aqueous solution tank 7.

On the other hand, a branch pipe 61 branches from the fitting pipe 19a, extends downward and then connected, via a valve 65, with a branch pipe 63 which branches off the pipe 15.

With the above construction, the fuel tank 5 is provided with a fluid level detection sensor 71, and the aqueous solution tank 7 is provided with a fluid level detection sensor 73. A temperature sensor 75 is placed near the fuel inlet I1 of the cell stack 3. The fluid level detection sensor 71 detects the fluid level of methanol fuel S1 in the fuel tank 5. The fluid level detection sensor 73 detects the fluid level of methanol aqueous solution S2 in the aqueous solution tank 7. The temperature sensor 75 detects the temperature of the methanol aqueous solution supplied via the fuel inlet I1.

Further, a controller 81 is disposed, to oppose the heat exchanger 9 and the gas-liquid separator 33, with the air pump 23 in between (See Fig. 3). The controller 81 is electrically connected with the concentration sensor 20, the fluid level detection sensor 71, the fluid level detection sensor 73 and the temperature sensor 75. The controller 81 is constituted with a substrate, a microprocessor and other electric components mounted on the substrate.

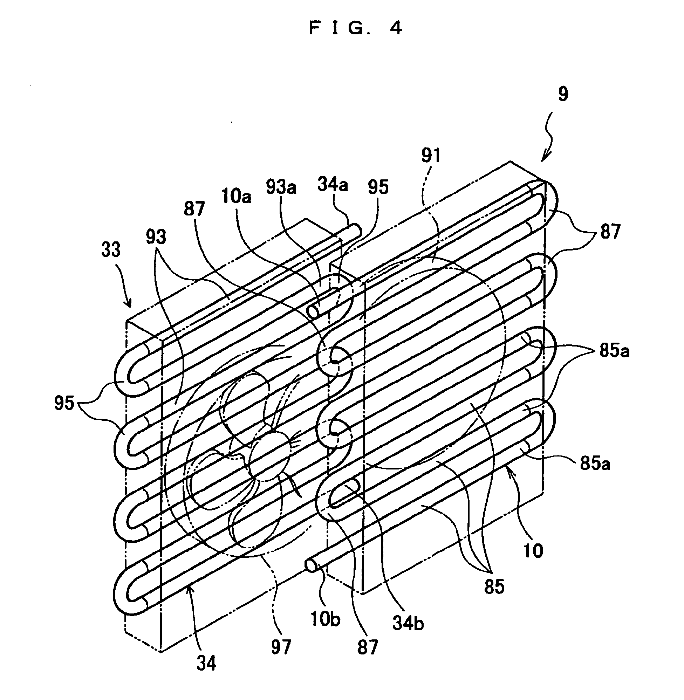

As shown in Fig. 4, the heat exchange pipe 10 of the heat exchanger 9 is made of metal such as stainless steel, and by welding for example.
Specifically, the heat exchange pipe 10 includes a plurality of straight pipe members 85 spaced in the vertical direction generally in parallel to each other, and a plurality of generally U shaped pipe joints 87. In order that the heat exchange pipe 10 is constituted as one continuous pipe from one end 10a through another end 10b, the straight pipe members 85 have their mutually adjacent ends 85a connected alternately by the pipe joints 87. The heat exchange pipe 10 is faced by a cooling fan 91.

Likewise, the gas-liquid separation pipe 34 of the gas-liquid separator 33 is made of metal such as stainless steel, and by welding for example.
Specifically, the gas-liquid separation pipe 34 includes a plurality of straight pipe members 93 spaced in the vertical direction generally in parallel to each other, and a plurality of generally U-shaped pipe joints 95. In order that the gas-liquid separation pipe 34 is constituted as one continuous pipe from one end 34a through another end 34b, the straight pipe members 93 have their mutually adjacent ends 93a connected alternately by the pipe joints 95. The gas-liquid separation pipe 34 is faced by a cooling fan 97. The gas-liquid separation pipe 34 allows gravitational flow of moisture content discharged from the cell stack 3.

The heat exchanger 9 and the gas-liquid separator 33 are disposed so that the pipe joints 87 which are part of the heat exchange pipe 10 and the pipe joints 95 which are part of the gas-liquid separation pipe 34 are faced to each other.

Next, a system operation when generating power in the fuel cell system 1 will be described.
Methanol aqueous solution, which is in the aqueous solution tank 7 and has a concentration of approximately 3%, is pumped by the aqueous solution pump 13, and flows through the pipe 11, then into the heat exchanger 9. While flowing in the heat exchange pipe 10, the solution is cooled (through heat exchange) by the fan 91 to a temperature suitable for the cell stack 3. The methanol aqueous solution which has been cooled goes through the pipes 15 and 17 as well as the concentration sensor 20, and into the filter 19, where impurities, etc. are removed. Then, the solution goes through the pipe 21 and the fuel inlet I1, and is supplied directly to the anode side of the cell stack 3.

On the other hand, air supplied from the air pump 23 goes through the pipe 25 and into the filter 27, where impurities are removed. Then, the air is supplied to the cathode side of the cell stack 3 via the pipe 29 and the air inlet I2.

During this process, on the anode side at each battery cell of the cell stack 3, methanol and water in the supplied methanol aqueous solution chemically react with each other to produce carbon dioxide and hydrogen ions. The hydrogen ions flow to the cathode side via the electrolyte, and electrochemically react with oxygen in the air supplied to the cathode, to produce water and electric energy. The generated electric energy is supplied to an unillustrated external circuit.

On the other hand, carbon dioxide (carbonic acid gas), which occurs at the anode in each battery cell, contains vapor of unused methanol. The carbon dioxide is returned to the aqueous solution tank 7 via the exhaust gas discharge port I3 of the cell stack 3 and the pipe 31.

The carbon dioxide which is returned to the aqueous solution tank 7 flows via the pipe 43, in which methanol-water vapor is cooled by the methanol trap 41 and thus separated (trapped) as methanol aqueous solution, from the carbon dioxide.

The carbon dioxide and the methanol aqueous solution which flow through the pipe 43 go into the tank main body 37a of the water tank 37, where the methanol aqueous solution is collected in the tank main body 37a while the carbon dioxide is discharged outside via the drain pipe 45.

On the other hand, water (water vapor) produced on the cathode side flows through the water outlet port I4 and the pipe 35, and through the gas-liquid separation pipe 34 of the gas-liquid separator 33. While flowing through the gas-liquid separation pipe 34, the water (water vapor) is cooled by the fan 97 and separated into gas and liquid. The gas component and water component thus separated by the gas-liquid separator 33 flow through the pipe 39 into the tank main body 37a of the water tank 37, where the gas component is discharged via the drain pipe 45.

The collected components (water + methanol aqueous solution) in the tank main body 37a are returned to the aqueous solution tank 7 by the water pump 49.

On the other hand, the controller 81 controls operations of e.g. the water pump 49 and the fuel pump 55, based on a concentration signal detected by the concentration sensor 20 indicating the concentration of the methanol aqueous solution, fluid level detection signals detected by the fluid level detection sensors 71 and 73 indicating the levels of methanol fuel and methanol aqueous solution in the respective tanks, a signal detected by the temperature sensor 75 indicating the temperature of the methanol aqueous solution which is supplied directly to the cell stack 3, and a detection signal of electric power (electric current) generated by the cell stack 3.

Specifically, if the concentration of the methanol aqueous solution in the aqueous solution tank 7 is higher than an appropriate level (3% approx.) for the above-described electrochemical reaction, the controller 81 stops operation of the fuel pump 55 and operates the water pump 49 to supply water from the water tank 37 to the aqueous solution tank 7, thereby maintaining the level of concentration of the methanol aqueous solution in the aqueous solution tank 7 appropriately to the above-described electrochemical reaction.

On the other hand, if the concentration of the methanol aqueous solution in the aqueous solution tank 7 is lower than an appropriate level (3% approx.) for the above-described electrochemical reaction, the controller stops operation of the water pump 49 and operates the fuel pump 55 to supply the methanol fuel from the fuel tank 5 to the aqueous solution tank 7, thereby maintaining the level of concentration of the methanol aqueous solution in the aqueous solution tank 7 appropriately to the above-described electrochemical reaction. This concentration control enables to maintain at a low level so called crossover in which unused methanol contained in the methanol aqueous solution in the cell stack 3 moves on the cathode side through the electrolyte.

According to the fuel cell system 1 as described, by disposing the heavy air pump 23 below the heavy cell stack 3, and disposing the fuel tank 5 and the aqueous solution tank 7 above the cell stack 3, it becomes possible to lower the center of gravity of the fuel cell system 1.
Therefore, it becomes possible to improve stability of the fuel cell system 1 in terms of component layout and increase vibration resistance. Further, even when an impact is applied from above to the fuel cell system 1, it is possible to block the impact with the fuel tank 5 and the aqueous solution tank 7, and reduce adverse influence on the fuel cell stack 1. Further, it becomes possible to make the fuel cell system 1 small, leading to improved volumetric efficiency.

Further, by disposing the fuel tank 5 and the aqueous solution tank 7 side by side generally at the same height, it becomes possible to make the fluid level of methanol fluid stored in the fuel tank 5 generally the same as the fluid level of methanol aqueous solution stored in the aqueous solution tank 7. Therefore, when the fuel pump 55 disposed below the fuel tank 5 and the aqueous solution tank 7 operates to supply methanol fuel from the fuel tank 5 to the aqueous solution tank 7, it becomes possible to reduce pressure difference between the inlet 55a and the outlet 55b of the fuel pump 55 which is due to fluid level difference in the tanks. As a result, it becomes possible to use, as the fuel pump 55, a pump which has a relatively small pumping capacity, to design and manufacture the fuel pump 55 easily, and to reduce cost of design and manufacture of the entire fuel cell system. Further, by disposing the fuel pump 55 below the fuel tank 5, it becomes easy to supply the methanol fuel from fuel tank 5 to the fuel pump 55 gravitationally. It should be noted here that the expression "the fuel tank 5 and the aqueous solution tank 7 are generally at the same height" means that the layout of the two tanks is such that methanol fuel level in the fuel tank 5 is within a ±10 cm range, and more preferably ±5 cm range, of the fluid level in the aqueous solution tank 7 at the time of normal operation.

Further, the heat exchanger 9, which heat-exchanges the methanol aqueous solution outputted from the aqueous solution tank 7 before the solution is sent to the cell stack, is disposed on a side of the fuel cell system. This allows greater exposure of the heat exchanger 9 to ambient air, leading to improved heat exchange efficiency as well as making possible to dispose the aqueous solution tank 7 and fuel tank 5 thereabove.

Further, the gas-liquid separator 33, which separates moisture content discharged from the cell stack 3 into gas and liquid, is placed between the cell stack 3 and the heat exchanger 9. This makes possible to cool the cell stack 3 with the cooled air produced in the operation of the gas-liquid separator 33.

Further, the heat exchanger 9 and the gas-liquid separator 33 are disposed so that the pipe joints 87 of the heat exchange pipe 10 in the heat exchanger 9 face the pipe joints 95 of the gas-liquid separation pipe 34 in the gas-liquid separator 33. This enables to reduce mounting space for the heat exchanger system (the heat exchanger 9 and the gas-liquid separator 33) in the direction along the straight pipe members 85 and 93, making possible to reduce the size of the entire fuel cell system (case F) including the heat exchanger system.

Further, since the heat exchanger 9 and the gas-liquid separator 33 are faced to the controller 81, sandwiching the air pump 23, it becomes possible to space the controller 81 from the heat exchanger 9 and the gas-liquid separator 33. Therefore, even if the heat exchange operation of the heat exchanger 9 and the gas-liquid separator 33 increases the temperature of the heat exchanger 9 and the gas-liquid separator 33, it is possible to reduce influence of the temperature increase on the controller 81 than in the case where the controller 81 is placed adjacent to the heat exchanger system (the heat exchanger 9 and the gas-liquid separator 33). As a result, it is possible to reduce temperature increase in the controller 81 which serves as part of the control system.

Further, the water outlet port I4 of the cell stack 3 is connected with the upper end 34a of the gas-liquid separation pipe 34 of the gas-liquid separator 33 via the pipe 35. Therefore, it is easy to gravitationally discharge moisture content, which contains water resulting from vapor in the gas-liquid separation, toward the water tank 37.

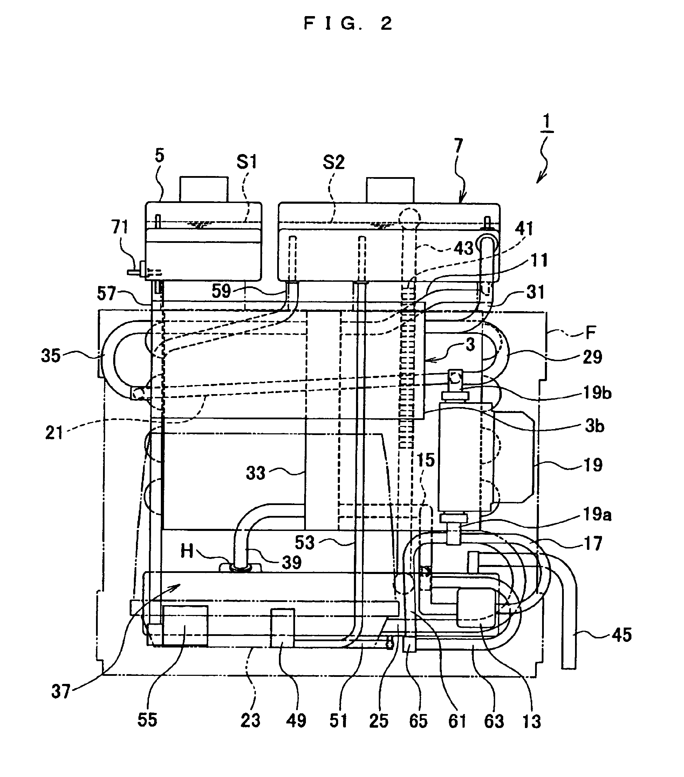

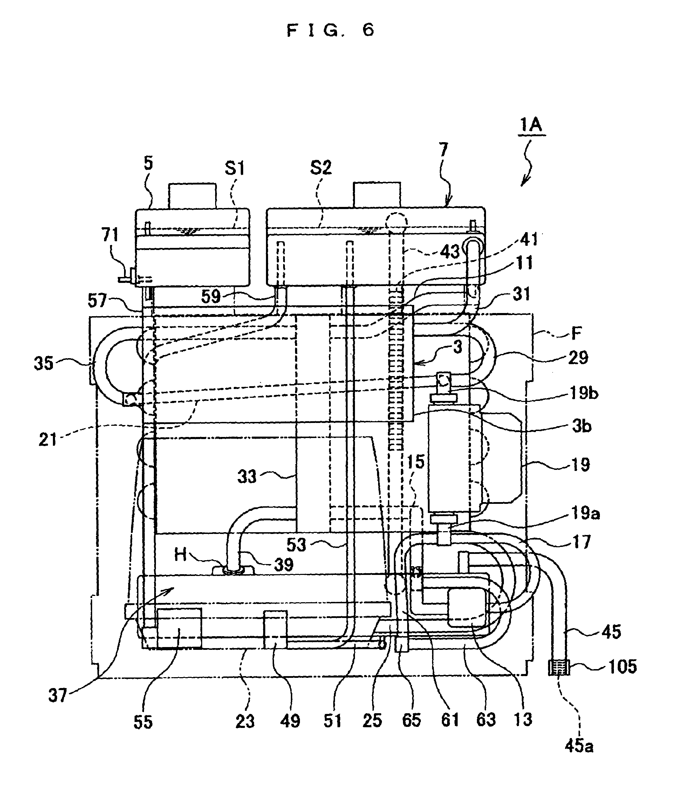

It should be noted that, as in a fuel cell system 1A shown in Fig. 6, the drain pipe 45 may have its outlet end formed with an engager (e.g. female thread) 45a, so that the engager 45a is provided with a detachable cap 105. Other arrangements in this fuel cell system are the same as in the fuel cell system 1 shown in Fig. 2, so description will not be repeated.

According to the fuel cell system 1A, when the fuel cell system 1A is not used for an extended period of time, if the cap 105 is attached to the outlet end of the drain pipe 45, it is possible to stop discharge water from the drain pipe 45 and raise the fluid level in the aqueous solution tank 7 high enough to submerge at least the electrolyte films in the fuel cell stack 3, preventing the electrolyte films from drying. Therefore, even if the fuel cell system 1A is not used for an extended time, there is no performance deterioration in the cell stack 3 due to dried electrolyte film.

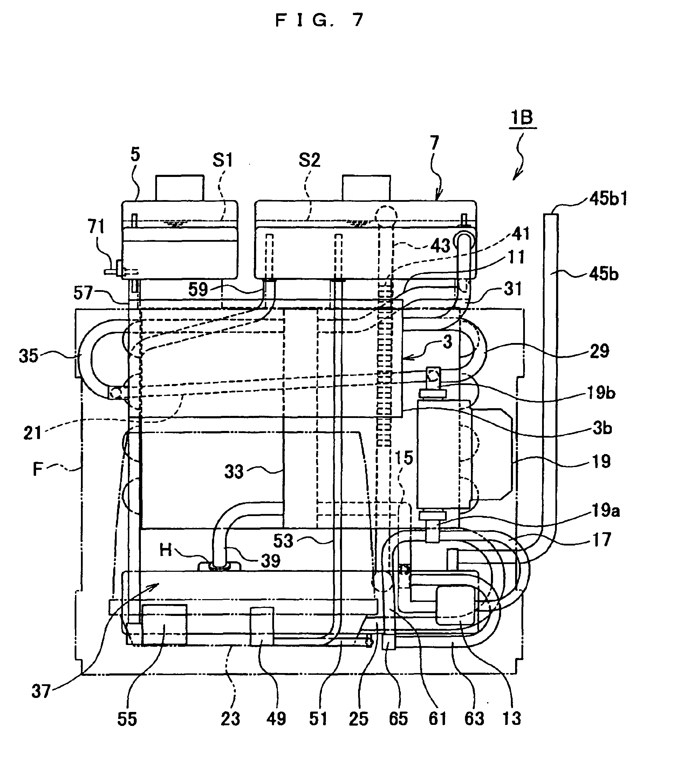

Further, as in a fuel cell system 1B shown in Fig. 7, the drain pipe 45 may be replaced with a drain pipe 45b. The drain pipe 45b is flexible and its outlet end 45b1 is pivotable. By pivoting the outlet end 45b1 and stretching the drain pipe 45b, it is possible to dispose the outlet end 45b1 at a place higher than the fluid level of the methanol aqueous solution S2 in the aqueous solution tank 7. Other arrangements in this fuel cell system are the same as in the fuel cell system 1 shown in Fig. 2, so description will not be repeated.

According to the fuel cell system 1B, it is possible to stop discharge water from the drain pipe 45 and to raise the fluid level in the aqueous solution tank 7 until at least the electrolyte films of the fuel cell stack 3 submerge. Therefore, even if the fuel cell system 1B is not used for an extended time, there is no performance deterioration in the cell stack 3 due to dried electrolyte film.

Next, reference will be made to Figs. 8(a)-(c), to describe variations of the fuel tank and the aqueous solution tank used in the fuel cell system 1.
A fuel tank 114 and an aqueous solution tank 116 are attached integrally to a parallelepiped frame 117, and are disposed above the cell stack 3 for example, as shown in Fig. 1.

Specifically, the fuel tank 114 and the aqueous solution tank 116 are formed by PE (Poly Ethylene) blow molding for example, as an integral body which has two chambers (hollows).
The fuel tank 114 is a hollow body which has a generally rectangular projection in a plan view and a longitudinal side view. The aqueous solution tank 116 is a hollow body which has a shape as a reminder of a generally parallelepiped body without the fuel tank 114.

The fuel tank 114 and the aqueous solution tank 116 have their mutually opposed faces generally mating each other. One of the opposed faces (e.g. the opposed face in the aqueous solution tank 116) is provided with a plurality (e.g. three) of dowels 118 protruding therefrom toward the other of the opposed faces (e.g. the opposed face in the fuel tank 114).

In the above arrangement, the opposed face in the fuel tank 114 is provided with a plurality of (three) dowel holes 120 at places corresponding to the dowels 118, each to be fitted by one of the dowels 118. As the dowels 118 are fitted into the dowel holes 120, the aqueous solution tank 116 is disposed to face the fuel tank 114 at a space therefrom.

The gap between the fuel tank 114 and the aqueous solution tank 116 is filled with a heat insulation member 121.
The fuel tank 114 is formed with an outlet 122 for the methanol fuel (a high concentration methanol aqueous solution having a concentration of 50% approx.) The outlet 122 is connected with the pipe 57.

Further, an inlet 124 is formed on an upper surface of the aqueous solution tank 116, in order to supply the methanol fuel. The inlet 124 is connected with a pipe 59. Further, the aqueous solution tank 116 has its upper surface formed with an inlet 126 in order to supply water, and the inlet 126 is connected with the pipe 53.

The aqueous solution tank 116 has its lower surface for example, provided with an outlet 128 for the methanol aqueous solution. The outlet 128 is connected with a pipe 11. Further, the aqueous solution tank 116 has its widthwise side surface formed with an inlet 130 to receive carbon dioxide which is a product of the chemical reaction (containing unused methanol vapor). The outlet 130 is connected with a pipe 31.

Still further, the aqueous solution tank 116 has its upper surface provided with an outlet 131 so that the carbon dioxide which is supplied via the inlet 130 can be discharged to the water tank. The outlet 131 is connected with the water tank 37 via a pipe 43.

By integrating the fuel tank 114 with the aqueous solution tank 116 into an integrated tank as described, it becomes possible to decrease the number of parts and the size of the fuel cell system, as compared with the embodiment described above.

Further, since the heat insulation member 121 is filled between the fuel tank 114 and the aqueous solution tank 116, it is possible to reduce influence of temperature fluctuation in either one of the components on the other.

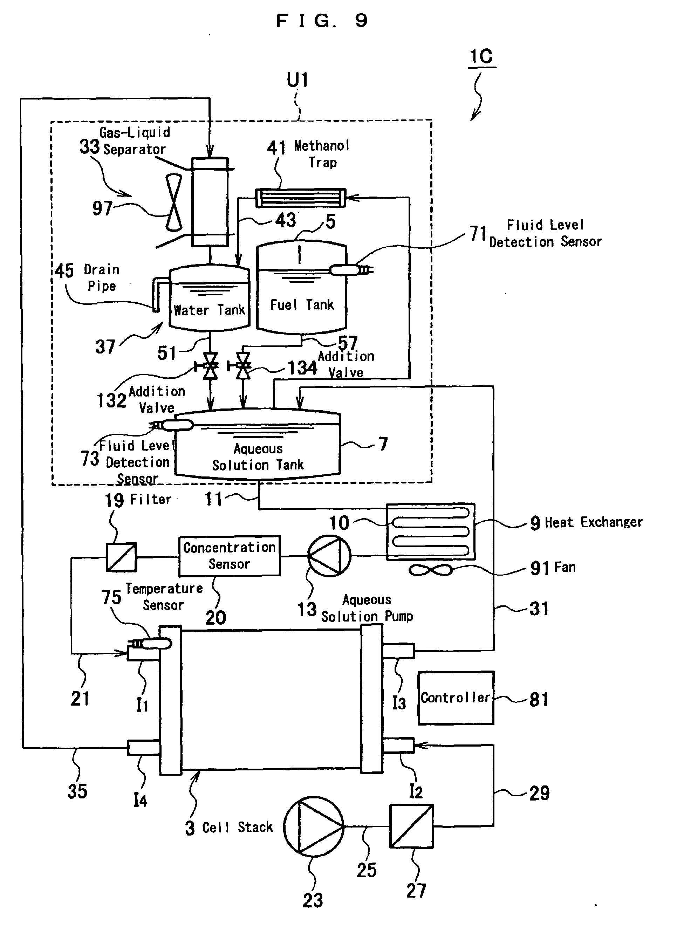

Next, reference will be made to Fig. 9 in describing a fuel cell system 1C as another embodiment of the present invention.
The fuel cell system 1C has a different layout structure from the fuel cell system 1.

Specifically, as shown in Fig. 9, in the fuel cell system 1C, a fuel tank 5, a water tank 37 a the gas-liquid separator 33 are disposed above an aqueous solution tank 7, and constitute a unit U1. A cell stack 3 is disposed below the aqueous solution tank 7. A pipe 35 rises from a water outlet port I4 of the cell stack 3 to above the gas-liquid separator 33, then curves to form an inversed U, to connect with an upper end 34a of a gas-liquid separation pipe 34 in the gas-liquid separator 33. With these arrangements, a pipe 51 which connects the water tank 37 and the aqueous solution tank 7 has its intermediate portion provided with an addition valve 132 which replaces the water pump 49 in the fuel cell system 1 and is capable of opening and closing. Further, a pipe 57 which connects the fuel tank 5 and the aqueous solution tank 7 has its intermediate portion provided with an addition valve 134 which replaces the fuel pump 55 in the fuel cell system 1 and is capable of opening and closing.

Other arrangements, layout and power generating operation in this fuel cell system are the same as in the fuel cell system 1, so description will not be repeated.

According to the fuel cell system 1C, since the fuel tank 5, the water tank 37 and the gas-liquid separator 33 are disposed above the aqueous solution tank 7, use of gravity becomes possible. Specifically, methanol fuel from the fuel tank 5 and water from the water tank 37 can be supplied to the aqueous tank 7 without using fuel pumps but through open/close operations of the addition valves 132 and 134 by the controller 81. As a result, it becomes possible to use addition valves which are cheaper than pumps, and to reduce cost of the entire fuel cell system 1C.

Particularly, according to this arrangement, since the gas-liquid separator 33 is disposed above the cell stack 3, it is possible to introduce moisture content, which is liquefied in the gas-liquid separator 33, smoothly to the water tank 37.

Further, since it is possible to dispose the aqueous solution tank 7 and the cell stack 3 closely to each other, it becomes possible to reduce pressure loss in the methanol aqueous solution circulation system.

The present invention being thus far described and illustrated in detail, it is obvious that these description and drawings only represent an example of the present invention, and should not be interpreted as limiting the invention. The spirit and scope of the present invention is only limited by words used in the accompanied claims.

## Claims

1. A direct methanol fuel cell system comprising:
an aqueous solution tank for storing methanol aqueous solution;
a fuel tank for storing methanol fuel to be supplied to the aqueous solution tank; and
a fuel cell stack supplied with the methanol aqueous solution from the aqueous solution tank for generating electric energy through electrochemical reactions;
wherein the fuel tank and the aqueous solution tank are disposed above the fuel cell stack.

2. The direct methanol fuel cell system according to Claim 1, further comprising an air pump disposed below the fuel cell stack, for supplying the fuel cell stack with air containing oxygen.

3. The direct methanol fuel cell system according to Claim 1, wherein the fuel tank and the aqueous solution tank are disposed side by side generally at a same height,
the direct methanol fuel cell system further comprising:
a first pipe extending downward from the fuel tank;
a second pipe extending downward from the aqueous solution tank; and
a fuel pump disposed below the fuel tank and the aqueous solution tank, and connected with the fuel tank via the first pipe, and with the aqueous solution tank via the second pipe,
the fuel pump pumping the methanol fuel supplied from the fuel tank via the first pipe to the aqueous solution tank via the second pipe.

4. The direct methanol fuel cell system according to Claim 1, wherein the fuel tank is disposed above the aqueous solution tank,
the direct methanol fuel cell system further comprising:
a pipe connecting the fuel tank and the aqueous solution tank; and
an addition valve placed in said pipe and capable of opening and closing.

5. The direct methanol fuel cell system according to Claim 1, further comprising a heat exchanger for a heat-exchanging operation to the methanol aqueous solution outputted from the aqueous solution tank before sending to the fuel cell stack,
the heat exchanger being disposed on a side of the fuel cell system.

6. The direct methanol fuel cell system according to Claim 5, further comprising a gas-liquid separator for gas-liquid separation of moisture content discharged from the fuel cell stack; and
a water tank for storing water obtained by the gas-liquid separation,
the gas-liquid separator being placed between the fuel cell stack and the heat exchanger.

7. The direct methanol fuel cell system according to Claim 6, wherein the heat exchanger includes a heat exchange pipe for guiding the methanol aqueous solution outputted from the aqueous solution tank to the fuel cell stack,
the gas-liquid separator including a gas-liquid separation pipe for guiding moisture content discharged from the fuel cell stack to the water tank,
the gas-liquid separator having at least part of the gas-liquid separation pipe faced to at least part of the heat exchange pipe.

8. The direct methanol fuel cell system according to Claim 6, further comprising:
an air pump disposed below the fuel cell stack for supplying the fuel cell stack with air containing oxygen; and
a controller disposed on a side of the air pump for controlling a concentration of the methanol aqueous solution outputted from the aqueous solution tank to the fuel cell stack,
the heat exchanger and the gas-liquid separator being opposed to the controller, sandwiching the air pump.

9. The direct methanol fuel cell system according to Claim 6, wherein the gas-liquid separator includes a gas-liquid separation pipe capable of letting moisture content from the fuel cell stack flow down gravitationally.

10. The direct methanol fuel cell system according to Claim 3, wherein the fuel tank includes a side surface provided with a first fitting,
the aqueous solution tank including a side surface provided with a second fitting to mate the first fitting.

11. The direct methanol fuel cell system according to Claim 1, further comprising:
a drain pipe connected with the water tank for draining water from the water tank; and
a cap attachable to and detachable from a discharging end of the drain pipe for preventing water from discharging.

12. The direct methanol fuel cell system according to Claim 1, further comprising:
a drain pipe connected with the water tank for draining water from the water tank;
wherein the drain pipe is flexible and has a pivotable discharging end, for the drain pipe discharging end to be placed above an upper surface of the fuel cell stack.
